# EUROPEAN PATENT APPLICATION

(11) **EP 2 058 145 A1**
(43) Date of publication of application: **13.05.2009**
(21) Application number: 07806194.2
(22) Date of filing: 29.08.2007
(51) Int. Cl.: B60C 11/12

(54) **PNEUMATIC TIRE**

(30) Priority: 30.08.2006 JP 2006234378
(71) Applicant: Bridgestone Corporation, Tokyo 104-8340 (JP)
(72) Inventor: WATABE, Ryoichi, Kodaira-shi, Tokyo 187-8531 (JP)
(74) Representative: Whalley, Kevin
(86) International application number: PCT/JP2007/066717
(87) International publication number: WO 2008/026616

(57) **Abstract**

Disclosed is a pneumatic tire including: plural blocks (7) formed by plural grooves (circumferential grooves 3 and lateral grooves 5) extending in a tire circumferential direction and in a tire width direction in a tread surface (1); sipes (9) narrower than the grooves, the sipes formed in each of the blocks (7); and plural projections (21) provided, in a middle region (M) in a depth direction of each sipe (9), on one sidewall surface (13) of the sipe (9), and having different projecting directions toward the other sidewall surface (15) of the sipe (9).

## Description

### TECHNICAL FIELD

The present invention relates to a pneumatic tire, and more specifically, to a pneumatic tire including plural blocks formed by plural grooves extending in a tire circumferential direction and in a tire width direction, the blocks including sipes narrower than the grooves formed therein.

### BACKGROUND ART

Heretofore, there have been various proposals for a so-called studless tire, that is a pneumatic tire designed to improve grip (that is, what is known as an edge effect) and thereby improve running (e.g., driving stability as well as acceleration, braking and drainage capabilities) on icy and snowy road surfaces.

There has been disclosed for example a pneumatic tire including plural blocks formed by plural grooves extending in a tire circumferential direction and in a tire width direction, the blocks including sipes narrower than the grooves formed therein. (See Patent Document 1, for instance.) The pneumatic tire is capable of not only improving the edge effect but also letting water, snow and the like on a contact patch (between a tread surface and a road surface) escape into the sipes (collecting and storing the water, snow and the like in the sipes), thus ensuring the running performance on the icy and snowy road surfaces.

In the above-mentioned conventional pneumatic tire, however, the sipes are formed in the blocks thereby to partition the blocks. Therefore, the blocks are reduced in stiffness and hence are likely to be deformed.

Therefore, the sipes lean down incident to deformation of the blocks, and thus, one sidewall surface of each of the sipes comes into close contact with the other sidewall surface thereof. Accordingly, it becomes difficult to secure space for collection and storage of the water, snow and the like in the sipes, so that the drainage capability is deteriorated. This deterioration makes it impossible to let the water, snow and the like escape into the sipes, leading to a reduction in the edge effect. As a result, the running performance, specifically the driving stability as well as the acceleration and braking capabilities are deteriorated.
Patent Document 1: Japanese Patent Application Publication No. 2001-191740 (See Pages 2-3 and Figure 1.)

### DISCLOSURE OF THE INVENTION

The present invention has been made in consideration of the above-described problems. An object of the present invention is to provide a pneumatic tire capable of improving running performance, specifically driving stability as well as acceleration, braking and drainage capabilities, on icy and snowy roads.

In order to attain the above object, according to a first aspect of the present invention, there is provided a pneumatic tire, including: plural blocks formed by plural grooves extending in a tire circumferential direction and in a tire width direction in a tread surface; sipes narrower than the grooves, the sipes formed in each of the blocks; and plural projections provided, in a middle region in a depth direction of the each sipe, on at least one sidewall surface of the sipe, the plural projections having different projecting directions toward the other sidewall surface of the sipe.

According to the first aspect of the present invention described above, the plural projections projecting in different directions are provided on at least the one sidewall surface of the sipe. Thereby, when the block deforms, the projections projecting in different directions can support the sipe thereby to prevent the sipe from leaning down and thus prevent close contact between the one sidewall surface and the other sidewall surface of the sipe.

Also, the plural projections projecting in different directions are provided in the middle region on at least the one sidewall surface of the sipe. This enables suppressing a reduction in stiffness of the block and also preventing the close contact between the one sidewall surface and the other sidewall surface of the sipe, even if the block is worn away on the part of the tread surface.

Further, since the plural projections projecting in different directions are provided in the middle region on at least the one sidewall surface of the sipe, the volume of space for collection and storage of water, snow and the like in the sipe can be increased, as compared to the provision of the projections in the entire area of the one sidewall surface of the sipe.

As mentioned above, the pneumatic tire according to the first aspect of the present invention enables increasing the volume of the space for the collection and storage of the water, snow and the like in the sipe and also preventing the close contact between the one sidewall surface and the other sidewall surface of the sipe. Accordingly, an edge effect is improved and thus running performance, specifically driving stability as well as acceleration, braking and drainage capabilities, is improved on icy and snowy road surfaces.

According to a second aspect of the present invention dependent from the first aspect of the present invention, in the pneumatic tire, the projection is located at 20 to 80% of the depth of the sipe from a bottom surface of the sipe. Desirably, an optimum condition is that the projection is located at 30 to 70% of the depth of the sipe from the bottom surface of the sipe.

According to the second aspect of the present invention described above, the projections are located at 20 to 80% (more preferably 30 to 70%) of the depth of the sipe from the bottom surface of the sipe. This enables suppressing the reduction in the stiffness of the block and also preventing the close contact between the one sidewall surface and the other sidewall surface of the sipe, even if the block is worn away on the part of the tread surface.

According to a third aspect of the present invention dependent from any one of the first and second aspects of the present invention, in the pneumatic tire, the sipe extends in a tread width direction while bending in the tire circumferential direction.

According to the third aspect of the present invention described above, the sipe extends in the tread width direction while bending in the tire circumferential direction. This enables improving grip (that is, what is known as the edge effect) on the icy and snowy road surfaces and thereby improving the running performance, specifically the driving stability as well as the acceleration, braking and drainage capabilities, on the icy and snowy road surfaces. Also, this enables letting water or the like on a contact patch (between the tread surface and a road surface) escape into the sipe and thereby preventing hydroplaning, which is a phenomenon where the tire floats.

According to a fourth aspect of the present invention dependent from any one of the first to third aspects of the present invention, in the pneumatic tire, the sipe extends in a tire radial direction while bending in the tire circumferential direction.

According to the fourth aspect of the present invention described above, the sipe extends in the tire radial direction while bending in the tire circumferential direction. This enables preventing the close contact between the one sidewall surface and the other sidewall surface of the sipe. Accordingly, the sipe is prevented from leaning down when the block becomes deformed, and thus, the reduction in the stiffness of the block can be further suppressed.

Also, the sipe extends in the tire radial direction while bending in the tire circumferential direction. This enables increasing the volume of the space for the collection and storage of the water, snow and the like in the sipe, as compared to an instance where the sipe extends in a straight line in the tire radial direction.

According to a fifth aspect of the present invention dependent from any one of the first to fourth aspects of the present invention, in the pneumatic tire, continuous portions connected at the bent portions of the sipe as to continuously extend in the tread width direction or a tire radial direction form a zigzag shape having an amplitude in the tire circumferential direction.

According to the fifth aspect of the present invention described above, the continuous portion form the zigzag having the amplitude in the tire circumferential direction, or equivalently, the sipe is what is called a three-dimensional sipe (hereinafter referred to simply as a "3-D sipe"). This enables preventing the close contact between the one sidewall surface and the other sidewall surface of the sipe and thereby preventing the sipe from leaning down when the block deforms. Accordingly, the reduction in the stiffness of the block can be further suppressed.

According to a sixth aspect of the present invention dependent from any one of the first to fifth aspects of the present invention, in the pneumatic tire, each projection projects in a direction different from an adjacent to each projection in the tread width direction, on the one sidewall surface of each sipe.

According to the sixth aspect of the present invention described above, the projection projects different direction from the adjacent projection in the tread width direction on the one sidewall surface of the sipe. This enables a further suppression of the reduction in the stiffness of the block against not only frontward and rearward inputs during braking or traction but also lateral and oblique inputs during cornering, and also enables improving the running performance, specifically the driving stability as well as the acceleration, braking and drainage capabilities, on the icy and snowy road surfaces.

According to a seventh aspect of the present invention dependent from any one of the first to sixth aspects of the present invention, in the pneumatic tire, the other sidewall surface of each sipe is provided with the projection at a position facing the projection provided on the one sidewall surface of the sipe.

According to any one of the first to seventh aspects of the present invention, therefore, there is provided the pneumatic tire capable of improving the running performance, specifically the driving stability as well as the acceleration, braking and drainage capabilities, on the icy and snowy road surfaces.

### BRIEF DESCRIPTION OF THE DRAWINGS

[Fig. 1] Fig. 1 is a developed view showing a tread pattern of a pneumatic tire according to an embodiment of the present invention.
[Fig. 2] Fig. 2 is a perspective view of blocks that form a tread surface of the pneumatic tire according to the embodiment.
[Fig. 3] Fig. 3 is a partly exploded perspective view of the block that forms the tread surface of the pneumatic tire according to the embodiment.
[Fig. 4] Figs. 4(a) and 4(b) are sectional views of the blocks, respectively, that form the tread surface of the pneumatic tire according to the embodiment, Fig 4 (a) being the sectional view taken along the arrowed line IVA-IVA of Fig. 3, Fig. 4 (b) being the sectional view taken along the arrowed line IVB-IVB of Fig. 3.
[Fig. 5] Fig. 5(a) is a developed view of a portion (a unit) of a sidewall surface of a sipe that forms the tread surface of the pneumatic tire according to the embodiment, and. Fig. 5(b) is a front view of the unit of the sidewall surface of the sipe that forms the tread surface of the pneumatic tire according to the embodiment.
[Fig. 6] Fig. 6 is a front view (viewed in the direction of arrow VI of Fig. 3) of the block that forms the tread surface of the pneumatic tire according to the embodiment.
[Fig. 7] Fig. 7 is a perspective view of the block that forms the tread surface of the pneumatic tire, given for assistance in explaining functions and advantageous effects of the present invention.
[Fig. 8] Fig. 8 is a partial enlarged perspective view of the block that forms the tread surface of the pneumatic tire according to the embodiment.
[Fig. 9] Figs. 9(a) and 9(b) are partly exploded perspective views of the blocks that form the tread surface of the pneumatic tire according to the embodiment, respectively.
[Fig. 10] Figs. 10(a) and 10 (b) are general views showing the overall configurations of sidewall surfaces of sipes that form tread surfaces of pneumatic tires according to a comparative example and an example of the present invention, respectively.
[Fig. 11] Fig. 11 is a table of assistance in explaining acceleration and braking capabilities and driving stability on icy road surfaces, of the pneumatic tires according to the comparative examples and the example of the present invention.

### BEST MODE FOR CARRYING OUT THE INVENTION

The best embodiment of the present invention will be described below with reference to the drawings. Incidentally, in the following disclosure of the drawings, the same or similar parts are designated by the same or similar reference numeral. It should be noted that the drawings are in schematic form, and the ratio between dimensions or the like is different from the actual ratio. Therefore, it is to be understood that specific dimensions or the like is determined, taken in connection with the following description. Also, it will be understood that there is a difference in the relationship or ratio between dimensions of the different drawings as cross-referred.

Incidentally, a pneumatic tire according to the embodiment of the present invention is assumed to be a general radial tire (studless tire) including a bead portion, a carcass layer and a belt layer (not shown). Also, the pneumatic tire according to the embodiment of the present invention is intended to be fitted to a passenger car.

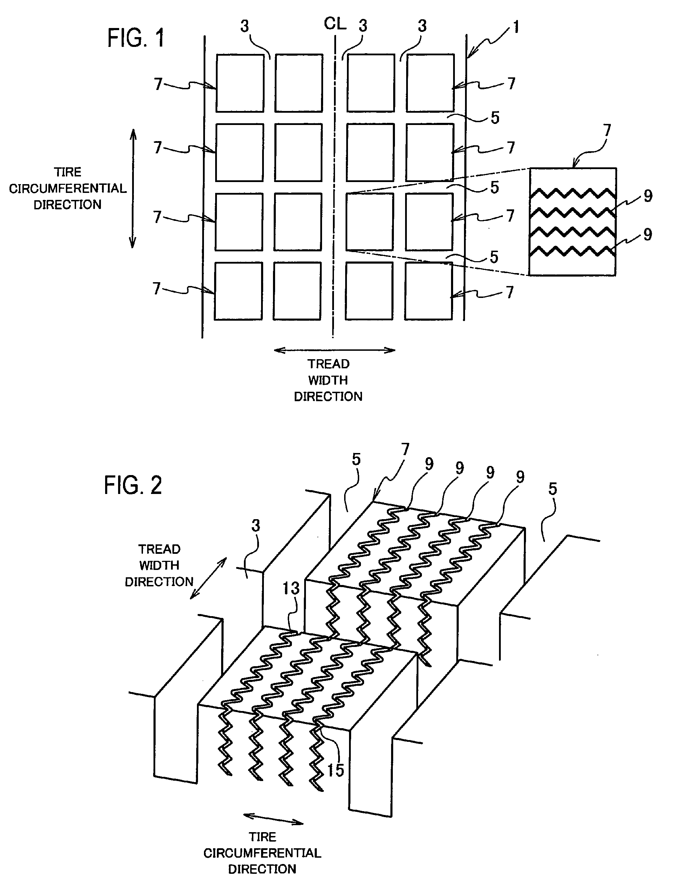

Fig. 1 is a developed view showing a tread pattern of the pneumatic tire according to the embodiment. Fig. 2 is a perspective view of blocks that form a tread surface of the pneumatic tire according to the embodiment. As shown in Figs. 1 and 2, a tread surface 1 of the pneumatic tire has an arrangement of plural blocks formed by plural grooves extending in a tire circumferential direction and in a tire width direction. Specifically, the tread surface 1 has plural blocks 7 formed by plural circumferential grooves 3 extending in the tire circumferential direction and plural lateral grooves 5 extending in a tread width direction, and sipes 9 narrower than the grooves (i.e., the circumferential grooves 3 and the lateral grooves 5), formed in the blocks 7.

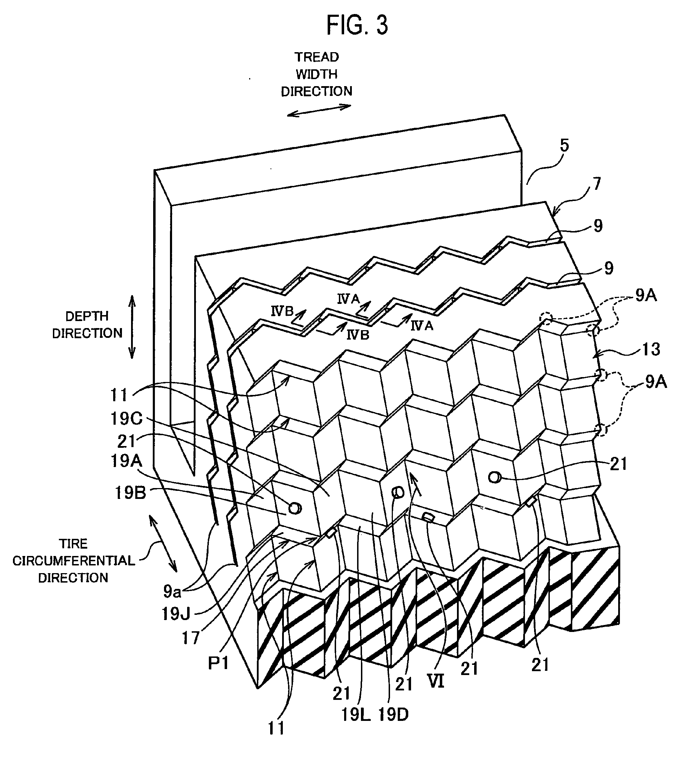

The sipe 9 is what is called a three-dimensional sipe (hereinafter referred to simply as a "3-D sipe"), which changes in shape in the tread width direction and in a depth direction. Specifically, as shown in Fig. 3, the sipe 9 extends in the tread width direction while bending in the tire circumferential direction (that is, the sipe 9 is in zigzag form in the tread width direction), and also, the sipe 9 extends in a tire radial direction while bending in the tire circumferential direction (that is, the sipe 9 is in zigzag form in the tire radial direction).

Continuous portions 11 connected at the bent portions 9A of the sipe 9 as to continuously extend in the tread width direction or a tire radial direction form a zigzag shape having an amplitude in the tire circumferential direction.

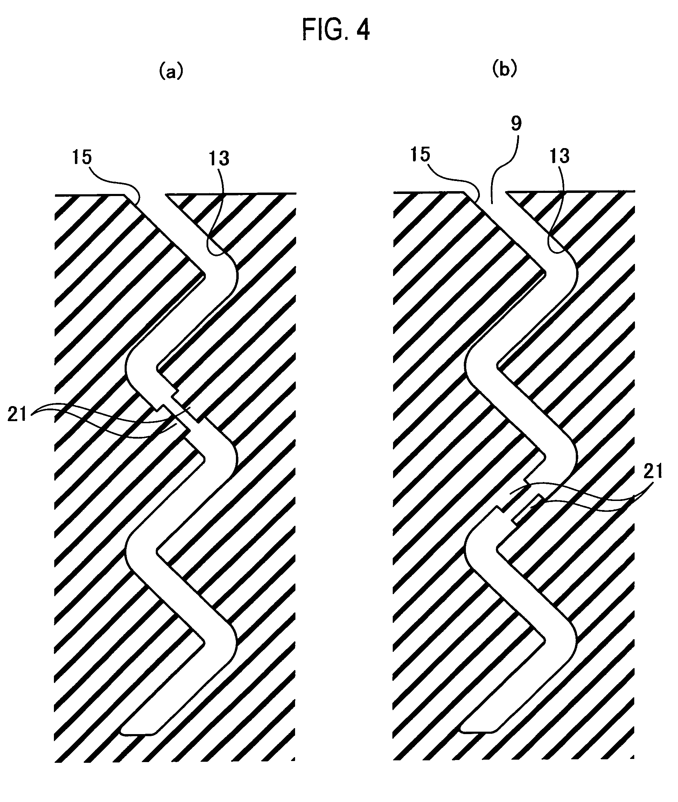

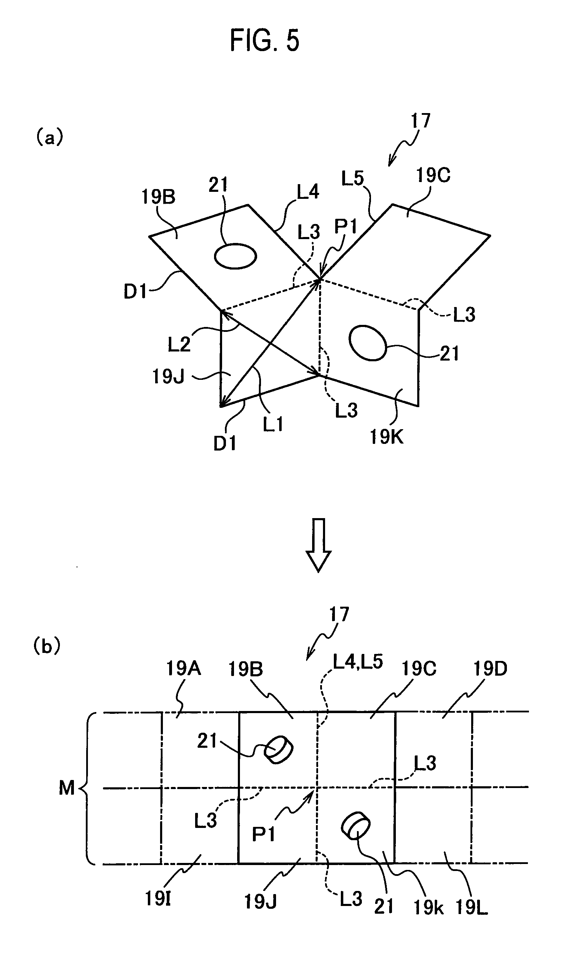

Thereby, one sidewall surface 13 of the sipe 9 and the other sidewall surface 15 of the sipe 9 are provided with plural combinations of rhombuses D1 (see Fig. 5(a)). A gap between the one sidewall surface 13 of the sipe 9 and the other sidewall surface 15 of the sipe 9 is set equal to a constant (see Figs. 2 and 3). Therefore, the one sidewall surface 13 of the sipe 9 and the other sidewall surface 15 of the sipe 9 are disposed parallel to each other (see Figs. 4(a) and 4(b)).

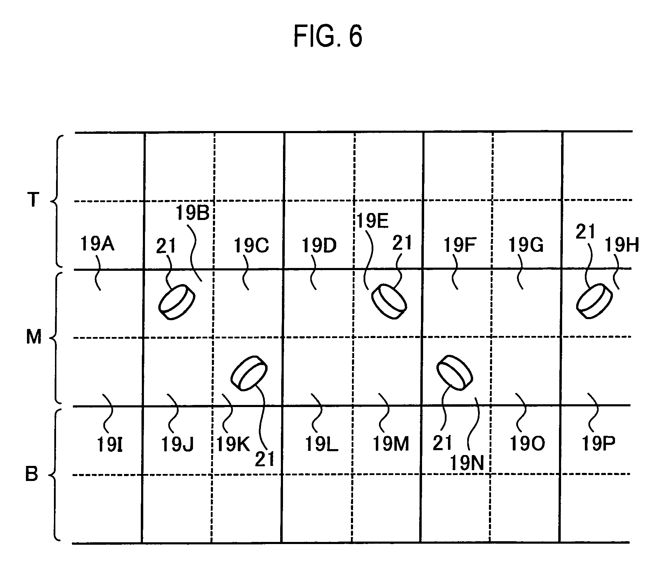

Here, the other sidewall surface 15 of the sipe 9 is provided with a projection 21 to be described later, at a position facing the projection 21 provided on the one sidewall surface 13 of the sipe 9. Specifically, on the other sidewall surface 15 of sipe 9, the projection 21 to be described later (see Figs. 5 (a) and 5(b) and Fig. 6) is at the position facing the projection 21 provided on the one sidewall surface of the sipe 9, in an upper portion of a middle region M, as shown in Fig. 4(a), and the projection 21 to be described later (see Figs. 5(a) and 5(b) and Fig. 6) is at the position facing the projection 21 provided on the one sidewall surface 13 of the sipe 9, in a lower portion of the middle region M, as shown in Fig. 4(b). Description of the other sidewall surface 15 of the sipe 9 will be hereinafter omitted, since the one sidewall surface 13 of the sipe 9 and the other sidewall surface 15 of the sipe 9 have the same configuration.

As shown in Fig. 5(a), a unit 17 of the one sidewall surface 13 of the sipe 9 can be developed into a shape formed of a combination of four faces 19B, 19C, 19J and 19K each with the shape of the rhombus D1 (that is, the rhombus in which one diagonal line L1 is slightly longer than the other diagonal line L2). Then, as shown in Fig. 5(a), the unit is mountain folded along dotted lines L3 so that sides L4 and L5 are joined together and thereby form a vertex P1. Thereby, as shown in Fig. 5(b), the one sidewall surface 13 of the sipe 9 is provided with plural units 17 (that is, the pyramid-shaped units) of the one sidewall surface 13 of the sipe 9, formed of the four rhombuses D1.

The one sidewall surface 13 of the sipe 9 as mentioned above is provided with plural projections 21 provided in the middle region M in the depth direction of the sipe 9 and having different directions projecting toward the other sidewall surface 15 of the sipe 9 (see Figs. 2 to 4).

As shown in Fig. 6, the projections 21 are provided in the middle region M in the depth direction of the sipe 9 and formed in a cylindrical shape. Also, the projections 21 project in a direction orthogonal to the faces 19 on which the projections 21 are formed respectively. Of the faces 19 which face upward (face toward the tread surface 1) in a top region T, the middle region M and a bottom region B, the faces 19A, 19C, 19E and 19G are disposed parallel to one another, and the faces 19B, 19D, 19F and 19H are disposed parallel to one another. Also, of the faces 19A to 19P which face downward (face toward a bottom surface 9a of the sipe 9) in the top region T, the middle region M and the bottom region B, the faces 19I, 19K, 19M and 190 are disposed parallel to one another, and the faces 19J, 19L, 19N and 19P are disposed parallel to one another.

Specifically, the projections 21 are provided on the faces 19B, 19E and 19H in the upper portion of the middle region M. In other words, the projection 21 is disposed two faces apart with respect to faces adjacent in the tread width direction on the one sidewall surface 13 of the sipe 9. Therefore, the projection 21 is different in projecting direction from a projection 21 adjacent in the tread width direction on the one sidewall surface 13 of the sipe 9, and is disposed at a constant height with respect to the adjacent projection 21 and the depth direction of the sipe.

Also, the projections 21 are provided on the faces 19K and 19N in the lower portion of the middle region M. In other words, the projection 21 is disposed two faces apart with respect to face in the tread width direction on the one sidewall surface 13 of the sipe 9. Therefore, the projection 21 is different in projecting direction from a projection 21 adjacent in the tread width direction on the one sidewall surface 13 of the sipe 9, and is disposed at a constant height with respect to the adjacent projection 21 and the depth direction of the sipe.

Preferably, the projection 21 is located at 20 to 80% of the depth of the sipe from the bottom surface 9a of the sipe 9. Desirably, an optimum condition is that the projection 21 is located at 30 to 70% of the depth of the sipe from the bottom surface 9a of the sipe 9.

Incidentally, if the projection 21 is located at less than 30% of the depth of the sipe from the bottom surface 9a of the sipe 9, this may possibly render it difficult to prevent close contact between the one sidewall surface 13 and the other sidewall surface 15 of the sipe on the part of the tread surface 1 side, and hence may possibly make it impossible to improve drainage capability.

Also, if the projection 21 is located at more than 70% of the depth of the sipe from the bottom surface 9a of the sipe 9, this may possibly render it difficult to prevent the close contact between the one sidewall surface and the other sidewall surface of the sipe even if the block 7 is worn away on the part of the tread surface 1, and hence may possibly make it impossible to improve the drainage capability.

### [Functions and advantageous effects]

According to the pneumatic tire of the embodiment described above, the plural projections 21 projecting in different directions are provided on at least the one sidewall surface 13 of the sipe 9. Thereby, when the block 7 deforms, the projections 21 projecting in different directions can support the sipe 9 thereby to prevent the sipe 9 from leaning down, and thus prevent the close contact between the one sidewall surface 13 and the other sidewall surface 15 of the sipe 9.

Also, the plural projections 21 projecting in different directions are provided in the middle region M on at least the one sidewall surface 13 of the sipe 9. This enables suppressing a reduction in stiffness of the block 7 and also preventing the close contact between the one sidewall surface 13 and the other sidewall surface 15 of the sipe 9, even if the block 7 is worn away on the part of the tread surface 1.

Also, since the plural projections 21 projecting in different directions are provided in the middle region M on at least the one sidewall surface 13 of the sipe 9, the volume of space for collection and storage of water, snow and the like in the sipe can be increased, as compared to the provision of the projections 21 in the entire area (i.e., the top region T, the middle region M and the bottom region B) of the one sidewall surface 13 of the sipe 9.

Also, the projection 21 is located at 30 to 70% of the depth of the sipe 9 from the bottom surface 9a of the sipe 9. This enables suppressing the reduction in the stiffness of the block 7 and also preventing the close contact between the one sidewall surface 13 and the other sidewall surface 15 of the sipe 9, even if the block 7 is worn away on the part of the tread surface 1.

Also, the sipe 9 extends in the tread width direction while bending in the tire circumferential direction. This enables improving grip (that is, what is known as an edge effect) on icy and snowy road surfaces and thereby improving running performance, specifically driving stability as well as acceleration, braking and drainage capabilities, on the icy and snowy road surfaces, and also enables letting water or the like on a contact patch (between the tread surface 1 and a road surface) escape into the sipe 9 and thereby preventing hydroplaning which is a phenomenon where the tire floats.

Also, the sipe 9 extends in the tire radial direction while bending in the tire circumferential direction. This enables preventing the close contact between the one sidewall surface 13 and the other sidewall surface 15 of the sipe 9 and thereby preventing the sipe 9 from leaning down when the block 7 deforms, and thus enables a further suppression of the reduction in the stiffness of the block.

Also, the sipe 9 extends in the tire radial direction while bending in the tire circumferential direction. This enables increasing the volume of the space for the collection and storage of the water, snow and the like in the sipe 9, as compared to an instance where the sipe 9 extends in a straight line in the tire radial direction.

Also, the continuous portion 11 is formed in the zigzag form having the amplitude in the tire circumferential direction, or equivalently, the sipe 9 is what is called the 3-D sipe. This enables preventing the close contact between the one sidewall surface 13 and the other sidewall surface 15 of the sipe 9 when the block 7 becomes deformed and thereby preventing the sipe 9 from leaning down. Thus this enables a further suppression of the reduction in the stiffness of the block.

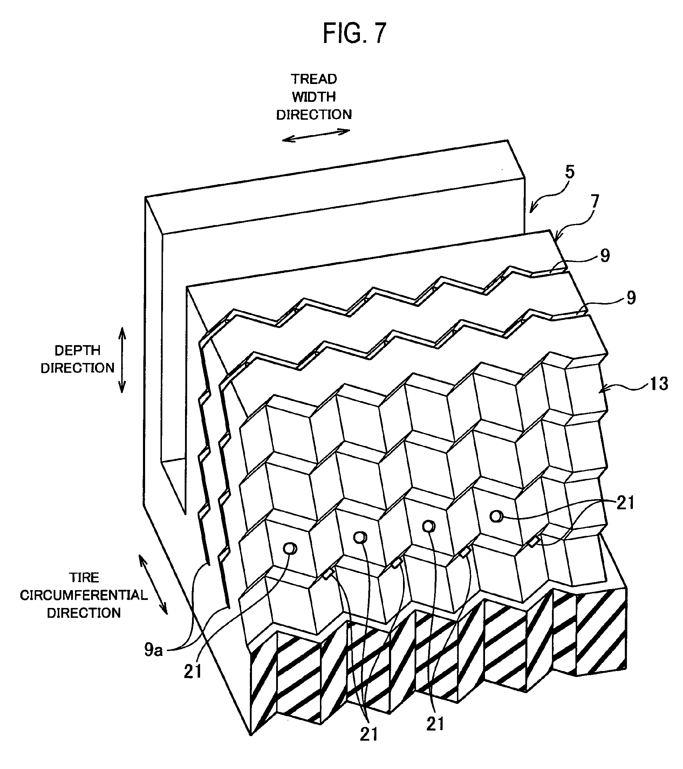

Further, the projection 21 is different in projecting direction from the projection 21 adjacent in the tread width direction on the one sidewall surface 13 of the sipe 9. This enables a further suppression of the reduction in the stiffness of the block 7 against not only frontward and rearward inputs during braking or traction but also lateral and oblique inputs during cornering. Also the running performance, specifically the driving stability as well as the acceleration, braking and drainage capabilities, on the icy and snowy road surfaces can be improved, as compared to an instance where the projection 21 is identical in projecting direction to the adjacent projection 21 as shown in Fig. 7.

As mentioned above, the pneumatic tire according to the embodiment enables increasing the volume of the space in the sipe 9 for the collection and storage of the water, snow and the like, and also preventing the close contact between the one sidewall surface 13 and the other sidewall surface 15 of the sipe 9, and thereby enables improving the edge effect and thus improving the running performance, specifically the driving stability as well as the acceleration, braking and drainage capabilities, on the icy and snowy road surfaces.

### [Other embodiments]

As mentioned above, the disclosure of the present invention has been given by way of the embodiment of the present invention; however, it is to be understood that the description and drawings that form part of the disclosure are not intended to limit the scope of the invention.

Specifically, description has been given, assuming that the pneumatic tire according to the embodiment is the general radial tire including the bead portion, the carcass layer and the belt layer (not shown) ; however, the pneumatic tire is not so limited but may be a tire other than the radial tire (for example, a bias tire).

Also, the pneumatic tire according to the embodiment of the present invention has been described as that intended to be fitted to the passenger car; however, the pneumatic tire is not so limited but may be intended to be fitted to a vehicle other than the passenger car (for example, a bus or a truck).

Also, the pneumatic tire according to the embodiment has been described as that including the projection 21 formed in the cylindrical shape; however, the pneumatic tire is not so limited but may include a projection formed in the shape of a triangular prism or a rectangular prism, for example.

Also, the pneumatic tire according to the embodiment of the present invention has been described as that including one projection 21 provided for each corresponding face 19; however, the pneumatic tire is not so limited but may include plural projections provided for each corresponding face 19.

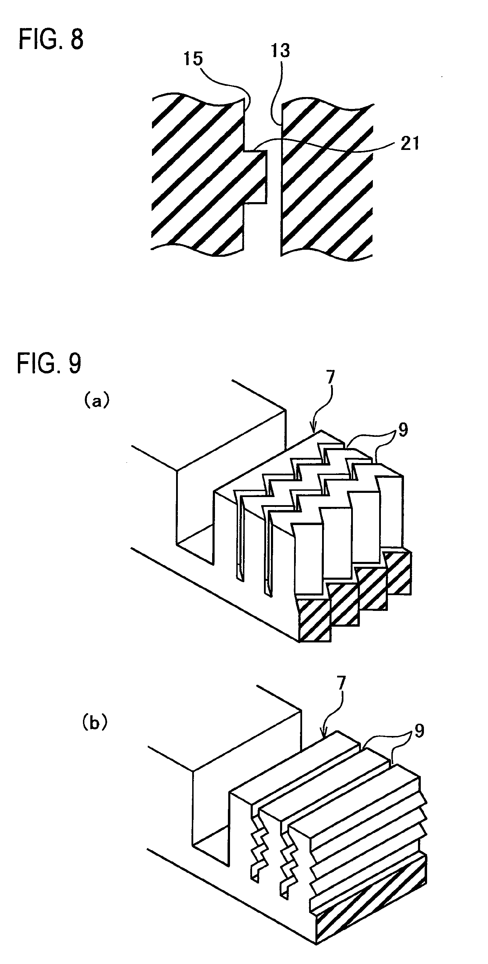

Also, the pneumatic tire according to the embodiment of the present invention has been described as that including the projections 21 provided on the one sidewall surface 13 of the sipe 9 and the other sidewall surface 15 of the sipe 9; however, the pneumatic tire is not so limited but may include the projection 21 provided on at least the one sidewall surface 13 of the sipe 9, as shown in Fig. 8.

Also, the pneumatic tire according to the embodiment has been described as that including the sipe 9 in the form of the 3-D sipe; however, the pneumatic tire is not so limited but may include a two-dimensional sipe (a 2-D sipe) extending in zigzag form only in the tread surface as shown for example in Fig. 9(a), or include a 2-D sipe extending in zigzag form only in the tire radial direction as shown for example in Fig. 9 (b) . Also in this instance, the projections (not shown) are provided in the middle region in the depth direction of the sipe, and project in different directions toward the other sidewall surface 15 of the sipe 9.

Further, the pneumatic tire according to the embodiment has been described as that including the sipe 9 extending in the tread width direction while bending in the tire circumferential direction (that is, the sipe 9 is zigzag in the tread width direction) ; however, the pneumatic tire is not so limited but may include the sipe 9 extending in the tire circumferential direction while bending in the tread width direction (that is, the sipe 9 is zigzag in the tire circumferential direction).

From this disclosure, various alternative embodiments, examples and applicable technologies will be apparent to those skilled in the art. The scope of the invention is therefore to be determined solely by the appended claims.

### Example

Description will now be given with regard to the results of tests performed using pneumatic tires according to comparative examples 1 and 2 and an example 1 of the present invention given below to further clarify the advantageous effects of the present invention. Incidentally, it is to be understood that the present invention is not limited by these examples in any way.

Data on the pneumatic tires was measured under conditions given below.

Tire size: 195/65R15
Wheel size: 15×6JJ
Internal pressure condition: 200 kPa
Vehicle condition: FR vehicle (with a displacement of 2500 cc)
Load condition: one driver plus 60 kg (equivalent to two passengers)
Firstly, description will be given on the configurations of the pneumatic tires according to the comparative examples 1 and 2 and the example 1 of the present invention with reference to the drawings. Incidentally, the pneumatic tires are under the same conditions except for projections described below.

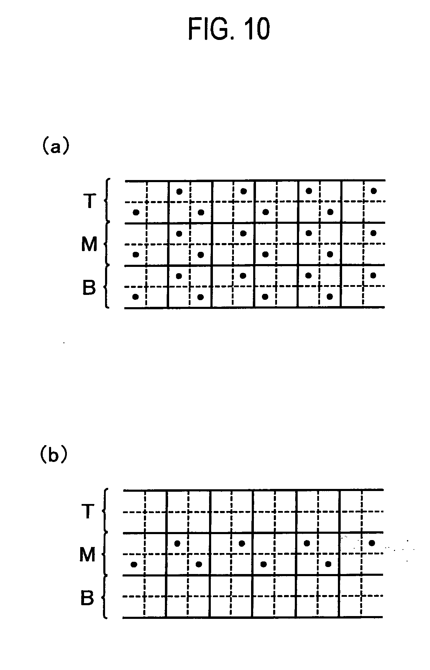

The pneumatic tire according to the comparative example 1 does not have an arrangement of the same projections 21 as those of the above-mentioned embodiment. The pneumatic tire according to the comparative example 2 has an arrangement of the same projections 21 (shown by black circles in Fig. 10) as those of the above-mentioned embodiment, throughout the entire area of the top region T, the middle region M and the bottom region B, as shown in Fig. 10(a). The pneumatic tire according to the example 1 of the present invention has an arrangement of the same projections 21 (shown by black circles in Fig. 10) as those of the above-mentioned embodiment, only in the middle region M, as shown in Figs. 3 and 10(b).

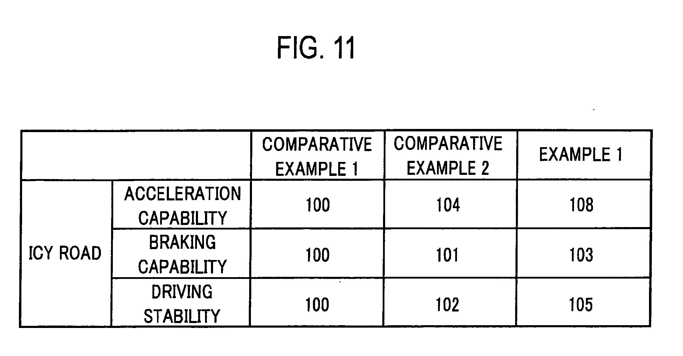

Description will be given of the pneumatic tires according to the comparative examples 1 and 2 and the example 1 of the present invention with regard to the acceleration and braking capabilities and the driving stability on icy road surfaces, with reference to Fig. 11.

### [The acceleration capability on the icy road]

The pneumatic tires according to the comparative examples 1 and 2 and the example 1 of the present invention were each fitted to the vehicle, and acceleration time for each tire was measured. Here, the acceleration time that elapses before the vehicle with the pneumatic tire according to the comparative example 1 reaches a velocity of 20 km/h starting at a velocity of 0 km/h on a test course on an icy road was expressed as "100." On a base of this "100," the acceleration capabilities of the pneumatic tires according to the comparative example 2 and the example 1 of the present invention, respectively, were expressed in index form. Note that, higher index indicates superior acceleration capability.

As a result, it has been shown that the pneumatic tire according to the example 1 of the present invention is superior in the acceleration capability on the icy road, as compared to the pneumatic tires according to the comparative examples 1 and 2.

### [The braking capability on the icy road]

The pneumatic tires according to the comparative examples 1 and 2 and the example 1 of the present invention were each fitted to the vehicle, and braking distance for each tire was measured. Here the braking distance of the vehicle with the pneumatic tire according to the comparative example 1 travels before reaching a velocity of 0 km/h after braking when running at a velocity of 20 km/h on the test course on the icy road was expressed as "100." On the basis of this "100," the braking distances of the pneumatic tires according to the comparative example 2 and the example 1 of the present invention, respectively, were expressed in index form. Note that, higher index indicates superior braking capability.

As a result, it has been shown that the pneumatic tire according to the example 1 of the present invention is superior in the braking capability on the icy road, as compared to the pneumatic tires according to the comparative examples 1 and 2.

### [The driving stability on the icy road]

The pneumatic tires according to the comparative examples 1 and 2 and the example 1 of the present invention were each fitted to the vehicle, and the driving stability for each tire was measured. Here, the driving stability of the pneumatic tire according to the comparative example 1, running at a constant velocity on the test course on the icy road was expressed as "100." On the basis of this "100," the driving stabilities of the pneumatic tires according to the comparative example 2 and the example 1 of the present invention, respectively, were evaluated by a professional driver making feeling evaluations. Note that, higher index indicates superior driving stability.

As a result, it has been shown that the pneumatic tire according to the example 1 of the present invention is superior in the driving stability on the icy road, as compared to the pneumatic tires according to the comparative examples 1 and 2.

It is to be understood that the present invention is not limited to the above description of the example and the description of the embodiment of the invention given previously, and the invention may be appropriately changed and thereby practiced in other various forms.

Incidentally, this application is based on and claims priority of Japanese Patent Application No. 2006-234378 (filed on August 30, 2006), and the entire contents of which are incorporated herein by reference.

## Claims

1. A pneumatic tire, comprising:
a plurality of blocks formed by a plurality of grooves extending in a tire circumferential direction and in a tire width direction in a tread surface;
sipes narrower than the grooves, the sipes formed in each of the blocks; and
a plurality of projections provided, in a middle region in a depth direction of each sipe, on at least one sidewall surface of the sipe, the plurality of projections having different projecting directions toward the other sidewall surface of the sipe.

2. The pneumatic tire according to claim 1, wherein the projections are located at 20 to 80% of the depth of each sipe from a bottom surface of the sipe.

3. The pneumatic tire according to claim 1, wherein each sipe extends in a tread width direction while bending in the tire circumferential direction.

4. The pneumatic tire according to claim 3, wherein continuous portions connected at the bent portions of the sipe as to continuously extend in the tread width direction or a tire radial direction form a zigzag shape having an amplitude in the tire circumferential direction.

5. The pneumatic tire according to claim 1, wherein each sipe extends in a tire radial direction while bending in the tire circumferential direction.

6. The pneumatic tire according to claim 5, wherein continuous portions connected at the bent portions of the sipe as to continuously extend in the tread width direction or a tire radial direction form a zigzag shape having an amplitude in the tire circumferential direction.

7. The pneumatic tire according to claim 1, wherein each projection projects in a direction different from a projection adjacent to the each projection in the tread width direction, on the one sidewall surface of each sipe.

8. The pneumatic tire according to claim 1, wherein the other sidewall surface of each sipe is provided with the projection at a position facing the projection provided on the one sidewall surface of the sipe.
